# EUROPEAN PATENT APPLICATION

(11) **EP 3 179 236 A1**
(43) Date of publication of application: **14.06.2017**
(21) Application number: 16202272.7
(22) Date of filing: 05.12.2016
(51) Int. Cl.: G01N 21/94

(54) **SHEET INSPECTION DEVICE AND SHEET PROCESSING APPARATUS**

(30) Priority: 07.12.2015 JP 2015238693
(71) Applicant: Kabushiki Kaisha Toshiba, Tokyo 105-8001 (JP)
(72) Inventor: IKARI, Seiji, Minato-ku, Tokyo 105-8001 (JP)
(74) Representative: Horn Kleimann Waitzhofer Patentanwälte PartG mbB

(57) **Abstract**

According to one embodiment, a sheet inspection device includes an illuminator (211) configured to illuminate a sheet (P) with first light (L1) that has a first wavelength band and is absorbed by an adhesion material (T) adhering to the sheet (P) at a high absorptivity and second light (L2) that has a second wavelength band and is absorbed by the adhesion material at an absorptivity lower than the first wavelength band, an illumination control portion (212) configured to control the illuminator (211) so as to illuminate the sheet (P) alternately with the first light (L1) and the second light (L2), a photo receiver (213) configured to receive the first light (L1) and the second light (L2) that have been transmitted through the sheet (P), and a detecting portion (215) configured to detect the adhesion material (T) adherent to the sheet (P) based on the difference between the intensity of the first light (L1) received by the photo receiver (213) and the intensity of the second light (L2) received by the photo receiver (213).

## Description

### CROSS-REFERENCE TO RELATED APPLICATION

This application is based upon and claims the benefit of priority from Japanese Patent Application No. 2015-238693, filed on Dec. 7, 2015; the entire contents of which are incorporated herein by reference.

### FIELD

Embodiments described herein relates generally to a sheet inspection device and a sheet processing apparatus.

### BACKGROUND

Conventionally, sheet inspection devices for inspecting whether or not an adhesion material such as a tape is adherent to a sheet such as a negotiable instrument or a bank note are known. Conventional sheet inspection devices include a large-scale structure such as a halogen lamp, an elliptical mirror or a plurality of light receiving sensors, and the cost and size thereof are high.

### BRIEF DESCRIPTION OF THE DRAWINGS

FIG. 1 is a perspective view showing an appearance of a sheet processing apparatus;
FIG. 2 is a front view showing an internal configuration of the sheet processing apparatus;
FIG. 3 is a block diagram showing a configuration of the sheet processing apparatus;
FIG. 4 is a block diagram showing a configuration of an adhesion material detecting portion;
FIG. 5 is a graph showing a relationship between a wave number and a transmissivity of light that has been transmitted through an adhesion material (tape);
FIG. 6 is a graph showing an example of properties of first light and properties of second light;
FIG. 7 is a plan view showing an example of an arrangement of a plurality of first light emitting elements and a plurality of second light emitting elements;
FIG. 8 is a plan view showing another example of an arrangement of the first light emitting elements and the second light emitting elements;
FIG. 9 is a schematic diagram showing an relationship between an adhesion material (tape) on a sheet and light receiving signals S1 and S2; and
FIG. 10 is a flowchart showing operations of the sheet processing apparatus.

### DETAILED DESCRIPTION

A sheet inspection device and a sheet processing apparatus of an embodiment of the present invention will be described below with reference to the drawings. The description will be given using X, Y and Z coordinate axes as necessary.

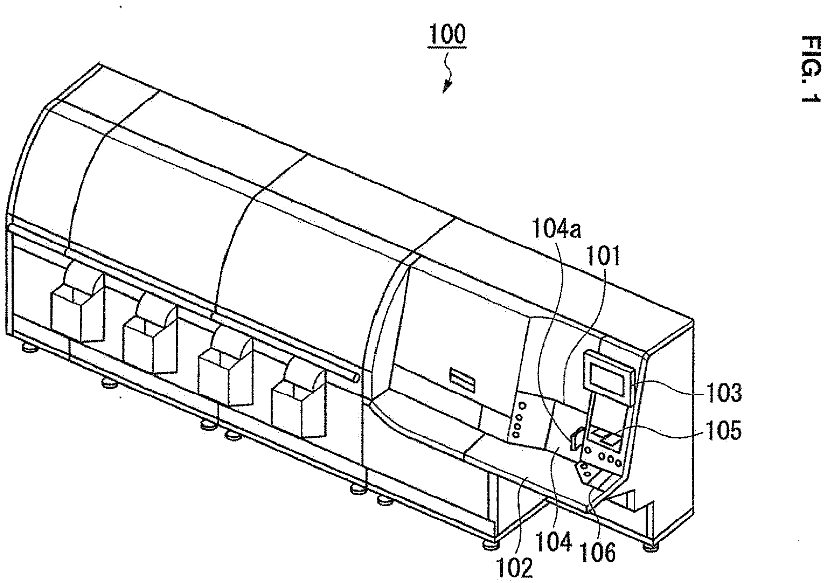

FIG. 1 is a perspective view showing the appearance of a sheet processing apparatus 100. The sheet processing apparatus 100 is an apparatus for inspecting sheets such as negotiable instruments, bank notes or various types of cards, and selecting and binding (bundling) reusable sheets. The sheet processing apparatus 100 is provided with a supplying portion 101, an operating portion 102, an operation/display panel 103, a door 104, a take-out port 105 and a keyboard 106.

A plurality of sheets are loaded into the supplying portion 101. The operating portion 102 is provided near the supplying portion 101, and is provided with the operation/display panel 103. The operation/display panel 103 receives input for various operations made by an operator, and displays guidance for the various operations and the like to the operator. For example, the operation/display panel 103 is provided with a touch panel that detects button input made by the operator touching a button displayed on a screen.

The door 104 is provided near the operation/display panel 103, and has a handle 104a for opening/closing the sheet loading port of the supplying portion 101. The take-out port 105 is a take-out port for removing sheets stacked on a rejection sheet stacker 127 to be described later. The keyboard 106 is an input apparatus used for the operator to input values.

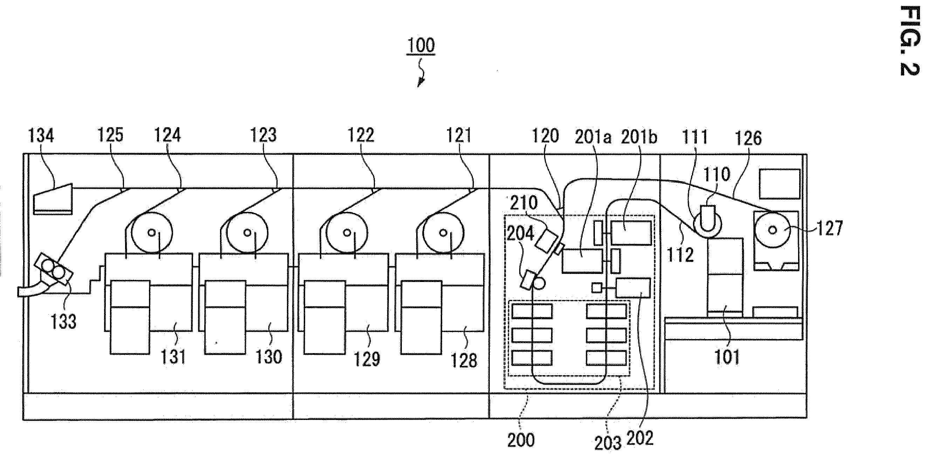

FIG. 2 is a diagram showing the internal configuration of the sheet processing apparatus 100. The sheet processing apparatus 100 is provided with a take-out portion 110 above the supplying portion 101. The take-out portion 110 sequentially takes out the uppermost sheet out of a plurality of sheets stacked on the supplying portion 101, one sheet at a time. The take-out portion 110 is provided with a suction roller 111 that comes into contact with the one uppermost sheet to suck this sheet by negative pressure and to rotate this sheet. The suction roller 111 can take out one sheet for every rotation, for example, and sequentially takes out one sheet out of a plurality of sheets stacked on the supplying portion 101 at constant time intervals.

The sheet processing apparatus 100 is provided with a conveying path 112 for conveying the sheets taken out from the take-out portion 110. The conveying path 112 is provided with a conveyance belt (not illustrated), a driving pulley (not illustrated), a motor (not illustrated) for running the conveyance belt, and the like. The sheets taken out by the suction roller 111 are conveyed on the conveying path 112 at a constant speed.

The sheet processing apparatus 100 is provided with a sheet inspection device 200 that detects optical and magnetic property information of the sheets that are being conveyed on the conveying path 112, and inspects the type, dirt and damage, the front and back orientation and the authenticity of the sheets, the presence or absence of an adhesion material, and the like. The sheet inspection device 200 is provided with a first image reader 201a, a second image reader 201b, a shape/watermark detecting portion 202, a magnetic detecting portion 203, a thickness detecting portion 204 and an adhesion material detecting portion 210.

Each of the first image reader 201a and the second image reader 201b reads an image on the front side or the back side of sheets that are being conveyed on the conveying path 112. For example, each of the first image reader 201a and the second image reader 201b reads an image on the front side or an image on the back side of the sheets using an image capturing apparatus such as a CCD camera.

The shape/watermark detecting portion 202 detects the shape of and a watermark image in the sheets that are being conveyed on the conveying path 112. The magnetic detecting portion 203 detects the magnetic property information of the sheets that are being conveyed on the conveying path 112. The thickness detecting portion 204 detects the thickness of the sheets that are being conveyed on the conveying path 112. The thickness detecting portion 204 determines, based on the detected thickness of the sheets, whether or not a plurality of sheets have been taken out at a time in a stacked state by the take-out portion 110. The adhesion material detecting portion 210 detects an adhesion material such as a tape adherent to sheets that are being conveyed on the conveying path 112. The adhesion material detecting portion 210 will be described in detail later.

The sheet processing apparatus 100 is provided with a first gate 120, a second gate 121, a third gate 122, a fourth gate 123, a fifth gate 124 and a sixth gate 125. The first gate 120 to the sixth gate 125 are arranged on the conveying path 112 downstream of the sheet inspection device 200 in a sheet conveying direction. Each of the first gate 120 to the sixth gate 125 switches the sheet guiding direction based on an inspection result of the sheet inspection device 200.

A rejection sheet conveying route 126 is a conveyance route branched from the conveying path 112. The first gate 120 is arranged at the branching point between the conveying path 112 and the rejection sheet conveying route 126. The first gate 120 guides, to the rejection sheet conveying route 126, sheets that have been decided by the sheet inspection device 200 not to be normal sheets, sheets that could not be inspected by the sheet inspection device 200, sheets to which adhesion material such as a tape is adherent, and the like. The sheet processing apparatus 100 is provided with the rejection sheet stacker 127 at the end of the rejection sheet conveying route 126. The rejection sheet stacker 127 stacks sheets discharged from the rejection sheet conveying route 126.

The sheet processing apparatus 100 is provided with a first stack/band portion 128, a second stack/band portion 129, a third stack/band portion 130 and a fourth stack/band portion 131. The second gate 121 guides, to the first stack/band portion 128, a sheet that is being conveyed on the conveying path 112. The third gate 122 guides, to the second stack/band portion 129, a sheet that is being conveyed on the conveying path 112. The fourth gate 123 guides, to the third stack/band portion 130, a sheet that is being conveyed on the conveying path 112. The fifth gate 124 guides, to the fourth stack/band portion 131, a sheet that is being conveyed on the conveying path 112.

For example, the first stack/band portion 128 and the second stack/band portion 129 stack and bind, at a time, 100 sheets whose front side is directed upward in the vertical direction, and the third stack/band portion 130 and the fourth stack/band portion 131 stack and bind, at a time, 100 normal bills whose back side is directed upward in the vertical direction. The bound sheets are discharged out of the sheet processing apparatus 100 by a conveyer (not illustrated) or the like.

The sixth gate 125 guides, to a shredder portion 133, sheets that are being conveyed on the conveying path 112. The shredder portion 133 cuts those of the sheets guided to the conveying path 112 by the first gate 120 that have not been stacked on any of the first stack/band portion 128 to the fourth stack/band portion 131. For example, sheets that are cut by the shredder portion 133 are sheets that are determined by the sheet inspection device 200 to not be reusable for being stained or damaged, or the like. Note that if a cutting mode is not selected by a main controller 151 to be described later, then the sheets are not conveyed to the shredder portion 133, but are stacked on a stacker 134.

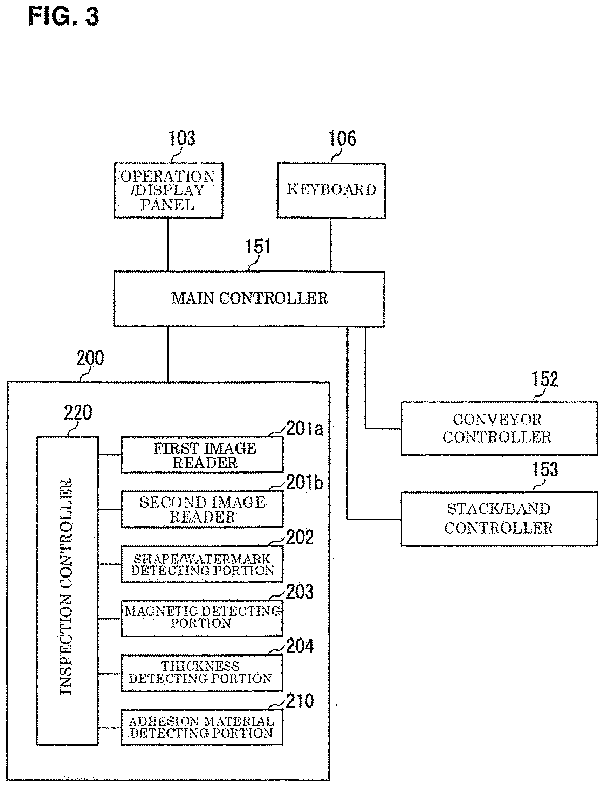

FIG. 3 is a block diagram showing the configuration of the sheet processing apparatus 100. As shown in FIG. 3, the sheet processing apparatus 100 is provided with the main controller 151, a conveyor controller 152 and a stack/band controller 153. The sheet inspection device 200 is provided with an inspection controller 220. The operation/display panel 103, the keyboard 106, the sheet inspection device 200, the conveyor controller 152 and the stack/band controller 153 are connected to the main controller 151.

The main controller 151, the conveyor controller 152, the stack/band controller 153 and the inspection controller 220 may be realized by a processor such as a CPU (Central Processing Unit) executing a program stored in a program memory. Note that the conveyor controller 152, the stack/band controller 153 and the inspection controller 220 may be realized by hardware such as an LSI (Large Scale Integration) chip, an ASIC (Application Specific Integrated Circuit) or an FPGA (Field-Programmable Gate Array) that has the same function as a function obtained by the processor executing a program.

The main controller 151 supplies control signals to each of the conveyor controller 152 and the stack/band controller 153, based on an instruction supplied from the operation/display panel 103 in accordance with operation input by the operator, an inspection result of the sheet inspection device 200, and the like.

The conveyor controller 152 controls the take-out portion 110, the conveying path 112, the rejection sheet conveying route 126, and the first gate 120 to the sixth gate 125 based on the control signals supplied from the main controller 151 so as to control the taking-out and conveying of sheets.

The stack/band controller 153 controls the rejection sheet stacker 127, the first stack/band portion 128, the second stack/band portion 129, the third stack/band portion 130 and the fourth stack/band portion 131 based on the control signals supplied from the main controller 151 so as to control the stacking and binding sheets.

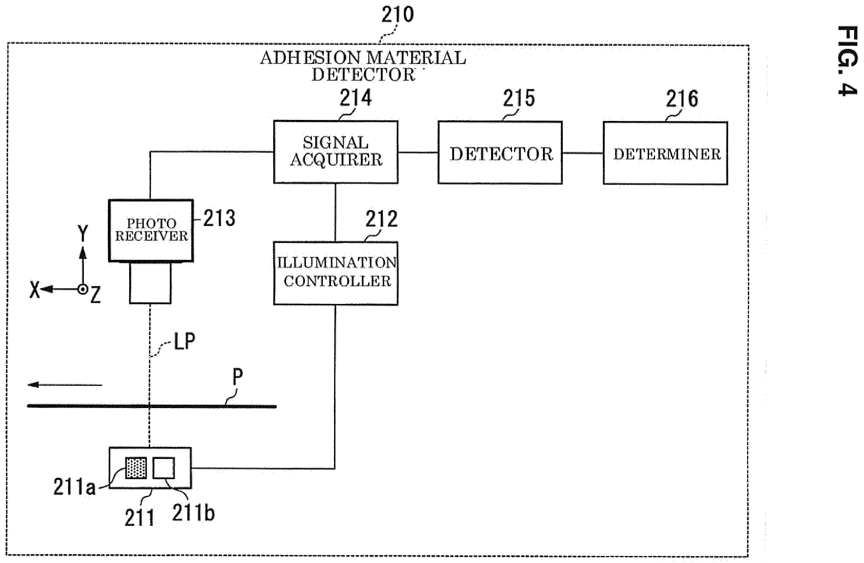

FIG. 4 is a block diagram showing the configuration of the adhesion material detector 210. The adhesion material detector 210 detects an adhesion material (adhesive material) such as a cellophane tape adherent to a sheet P that is being conveyed in a conveying direction D. Things that are to be detected (detection targets) are not limited thereto, and for example, other types of tape such as a polypropylene tape, a vinyl chloride tape and a polyester tape may be a detection target. Also, the adhesion material detector 210 may detect an adhesion material other than a tape, such as a sticker.

The adhesion material detector 210 is provided with an illuminator 211, an illumination controller 212, a photo receiver 213, a signal acquirer 214, a detector 215 and a determiner 216. The illumination controller 212, the signal acquirer 214, the detector 215 and the determiner 216 are realized by a processor such as a CPU executing a program stored in a program memory. Note that the illumination controller 212, the signal acquirer 214, the detector 215 and the determiner 216 may be realized by hardware such as an LSI chip, an ASIC or an FPGA that has the same function as a function obtained by the processor executing a program.

The illuminator 211 illuminates the sheet P that is being conveyed in an X axis direction (the conveying direction D) with first light L1 that has a first wavelength band and is absorbed at a higher absorptivity by an adhesion material that is adherent to the sheet P and is to be detected and second light L2 that has a second wavelength band and is absorbed by the adhesion material at a lower absorptivity (in other words, with a higher transmissivity) than that of the first wavelength band. The first light L1 and the second light L2 emitted from the illuminator 211 travel in a Y axis direction, and a portion of the light transmits the sheet P. The illuminator 211 is provided with a plurality of first light emitting elements 211a and a plurality of second light emitting elements 211b. For example, the first light emitting elements 211a may be LEDs (Light Emitting Diodes) that emit the first light L1 onto the sheet P, and the second light emitting elements 211b may be LEDs that emit the second light L2 onto the sheet P.

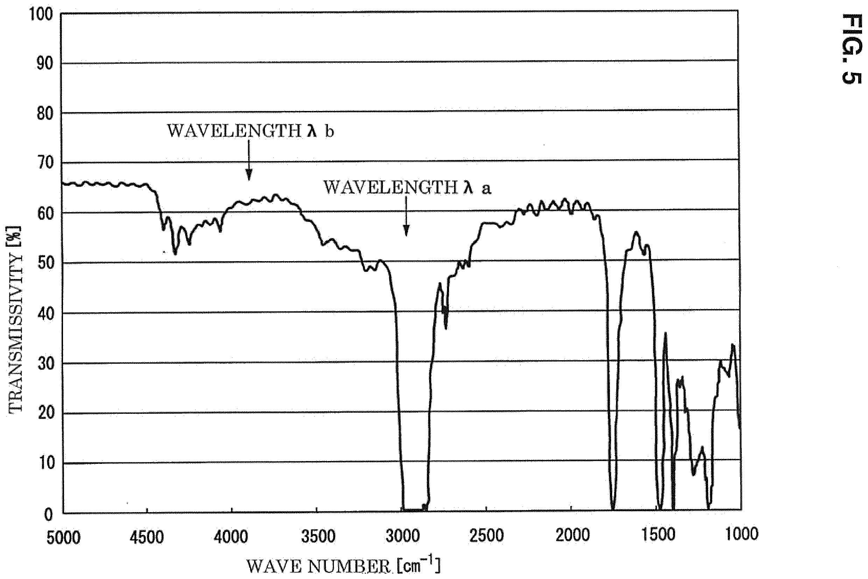

FIG. 5 is a graph showing the relationship between the wave number [cm⁻¹] and the transmissivity [%] of light that is transmitted through (passed through) a certain type of an adhesion material (tape). The abscissa of the graph shown in FIG. 5 indicates the wave number (the inverse number of the wavelength) of light that is transmitted through the adhesion material (tape). Light wave number is measured using a wave number meter. The ordinate of the graph shown in FIG. 5 indicates the transmissivity of the light that has been transmitted through the adhesion material (tape).

As shown in FIG. 5, the absorptivity of light having a wave number of 2800 [cm⁻¹] to 3000 [cm⁻¹] by the adhesion material (tape) is higher than the absorptivity of light having other wave numbers. Therefore, in this embodiment, a wavelength λa of the first light L1 is set to 3.3 [µm] to 3.6 [µm]. On the other hand, as shown in FIG. 5, the absorptivity of light having a wave number of 3800 [cm⁻¹] to 4200 [cm⁻¹] by the adhesion material (tape) is relatively low. Therefore, in this embodiment, a wavelength λb of the second light L2 is set to 2.4 [µm] to 2.6 [µm].

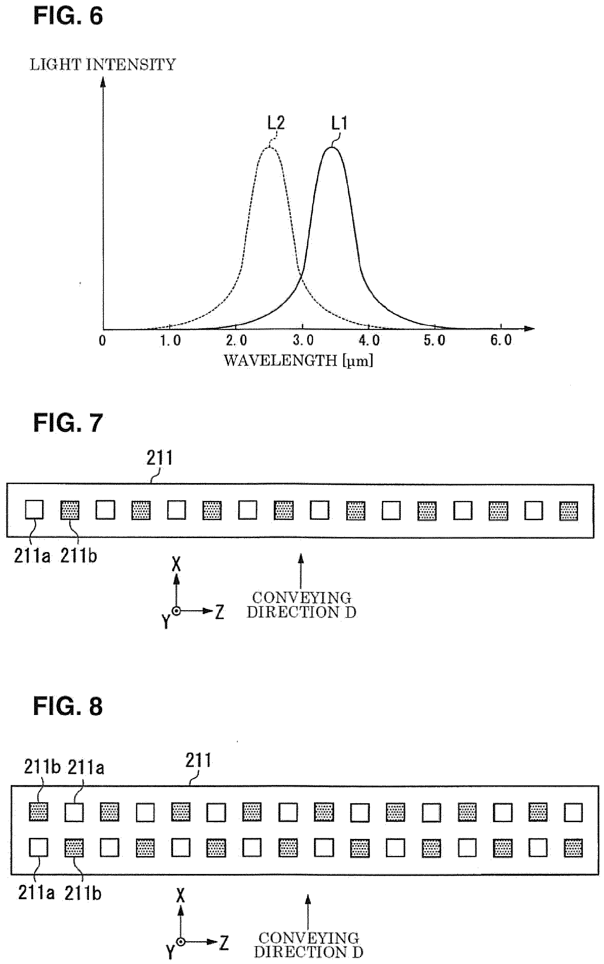

FIG. 6 is a graph showing examples of the properties of the first light L1 and the properties of the second light L2. The abscissa of the graph shown in FIG. 6 indicates the light wavelength [µm]. The ordinate of the graph shown in FIG. 6 indicates the light intensity. As shown in FIG. 6, the wavelength λa of the first light L1 emitted from the first light emitting elements 211a peaks at 3.3 [µm] to 3.6 [µm], and the wavelength λb of the second light L2 emitted from the second light emitting elements 211b peaks at 2.4 [µm] to 2.6 [µm].

FIG. 7 is a diagram showing an example of the arrangement of the first light emitting elements 211a and the second light emitting elements 211b. As shown in FIG. 7, the first light emitting elements 211a and the second light emitting elements 211b are lined up alternately in a direction intersecting the conveying direction D of the sheet P (e.g., a direction that orthogonally intersects the conveying direction D of the sheet P and is along the Z axis in the figure). This can uniformize the first light L1 and the second light L2 in the direction intersecting the conveying direction D of the sheet P.

The first light L1 and the second light L2 of the illuminator 211 travel on the same optical path LP. The same optical path LP is an optical path on which light is incident from substantially the same direction at least as viewed from each of the light receiving elements of the photo receiver 213. As shown in FIG. 7, the light beams from the first light emitting elements 211a are combined so as to form planar light, and similarly, the light beams from the second light emitting elements 211b are combined so as to form planar light. Accordingly, substantially the same optical path is formed.

FIG. 8 is a diagram showing another example of the arrangement of the first light emitting elements 211a and the second light emitting elements 211b. As shown in FIG. 8, the first light emitting elements 211a and the second light emitting elements 211b may be lined up in a plurality of rows in a direction intersecting the conveying direction D of the sheet P (e.g., the direction orthogonally intersecting the conveying direction D of the sheet P). This makes it possible to uniformize the first light L1 and the second light L2 in the direction orthogonal to the conveying direction D of the sheet P, and to increase the light amount of the first light L1 and the light amount of the second light L2.

The first light emitting elements 211a and the second light emitting elements 211b are arranged in one illuminator 211, and the first light L1 and the second light L2 travel on the same optical path LP and are irradiated onto the sheet P. This can simplify the structure of the adhesion material detecting portion 210.

The illumination controller 212 shown in FIG. 4 controls the illuminator 211 so as to illuminate the sheet P alternately with the first light L1 and the second light L2. The photo receiver 213 receives the first light L1 and the second light L2 that have been transmitted through the sheet P. Similarly to the illuminator 211, a plurality of light receiving elements are lined up in a direction intersecting the conveying direction D of the sheet P (e.g., the direction orthogonally intersecting the conveying direction D of the sheet P) in the photo receiver 213.

The signal acquirer 214 acquires a first light-receiving signal S1 that indicates the intensity of the first light L1 and a second light-receiving signal S2 that indicates the intensity of the second light L2 from the photo receiver 213 in synchronization with light illumination by the illumination controller 212. The signal acquirer 214 supplies the acquired first light-receiving signal S1 and second light-receiving signal S2 to the detector 215.

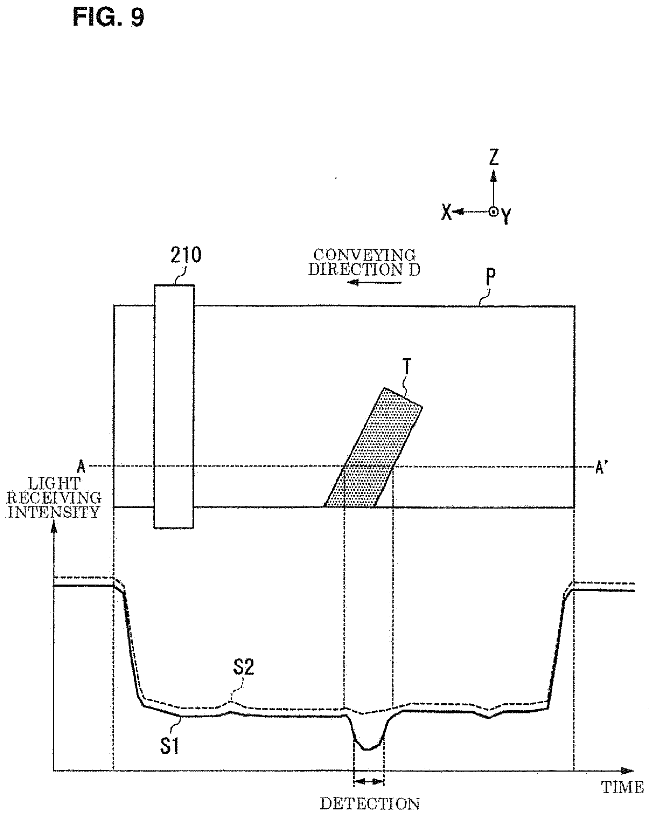

FIG. 9 is a diagram showing the relationship between an adhesion material (tape) T on the sheet P and the light receiving signals S1 and S2. FIG. 9 shows the first light-receiving signal S1 and the second light-receiving signal S2 that are detected by a portion of the light receiving elements of the photo receiver 213 that are present on a detection line A-A' along the X axis direction.

The first light L1 is absorbed by an adhesion material adherent to the sheet P, and thus the first light-receiving signal S1 at a position at which the adhesion material T is present has a small value. On the other hand, the second light L2 is absorbed by the adhesion material at an absorptivity lower than the absorptivity of the first light L1, and thus the second light-receiving signal S2 at the position at which the adhesion material T is present hardly changes at all.

Therefore, the detector 215 detects the adhesion material T adhering to the sheet P, based on the difference between the first light-receiving signal S1 and the second light-receiving signal S2 acquired by the signal acquiring portion 214. For example, if the difference between the first light-receiving signal S1 and the second light-receiving signal S2 exceeds a threshold value TH, the detector 215 determines that an adhesion material is adherent to the sheet P. The detector 215 supplies, to the determiner 216, data indicating an area on the sheet P in which the adhesion material T is present. For example, the detector 215 supplies, for each line, the number of pixels of the area in the sheet P in which the adhesion material T is present, to the determiner 216.

The determiner 216 determines, based on a detection result of the detector 215, whether or not to reuse the sheet P. For example, the determiner 216 calculates, in a plurality of lines from the leading edge to the trailing edge of the sheet P, the total number of pixels of the area in which the adhesion material T is present, and thereby calculates the area dimension of the adhesion material T adhering to the sheet P. Note that in this embodiment, the adhesion material detector 210 detects the adhesion material T for each line, but it is also possible to provide an area sensor for capturing the entirety of the sheet P at a time. In this case, processing for calculating, in a plurality of lines from the leading edge to the trailing edge of the sheet P, the total number of pixels of the area in which the adhesion material T is present becomes unnecessary.

If the calculated area dimension of the adhesion material T exceeds a reference value R, the determiner 216 supplies, to the inspection controller 220 of the sheet inspection device 200, a first notification indicating that the sheet P cannot be reused. On the other hand, if the calculated area dimension of the adhesion material is less than or equal to the reference value R, the determiner 216 supplies, to the inspection controller 220 of the sheet inspection device 200, a second notification indicating that the sheet P can be reused.

The inspection controller 220 supplies, to the main controller 151, the first notification or the second notification that has been supplied from the determiner 216. The main controller 151 supplies, to the conveyor controller 152, the first notification or the second notification that has been supplied from the inspection controller 220. The conveyor controller 152 controls the first gate 120 to the sixth gate 125 so as to switch a place in which the sheet P is to be stacked, based on whether the notification received from the main controller 151 is the first notification or the second notification.

For example, if the first notification (the first notification indicating that the sheet P is a damaged bill) is received from the main controller 151, the conveyor controller 152 controls the first gate 120 so as to guide the sheet P to the rejection sheet stacker 127. On the other hand, if the second notification (the second notification indicating that the sheet P is a normal bill) is received from the main controller 151, the conveyor controller 152 controls the first gate 120 to the sixth gate 125 so as to guide the sheet P to any one of the first stack/band portion 128 to the fourth stack/band portion 131, in accordance with the front and back orientation of the sheet P.

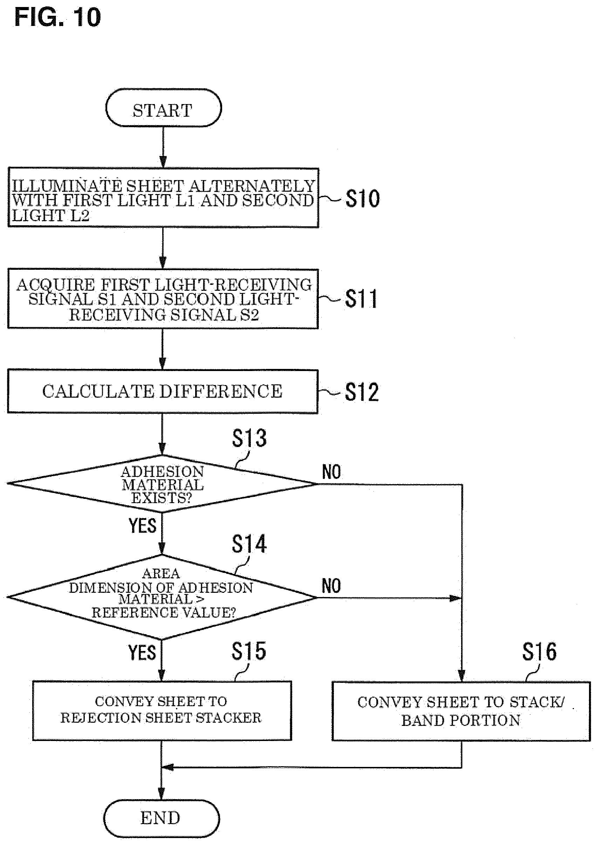

FIG. 10 is a flowchart showing the operations of the sheet processing apparatus 100. The illumination controller 212 controls the illuminator 211 so as to illuminate the sheet P alternately with the first light L1 and the second light L2 (step S10). The photo receiver 213 receives the first light L1 and the second light L2 that have been transmitted through the sheet P.

The signal acquirer 214 acquires, from the photo receiver 213, the first light-receiving signal S1 indicating the intensity of the first light L1 and the second light-receiving signal S2 indicating the intensity of the second light L2 in synchronization with light illumination by the illumination controller 212 (step S11). The signal acquirer 214 supplies the acquired first light-receiving signal S1 and second light-receiving signal S2 to the detector 215.

The detector 215 calculates the difference between the first light-receiving signal S1 and the second light-receiving signal S2 based on the first light-receiving signal S1 and the second light-receiving signal S2 supplied from the signal acquirer 214 (step S12). The detector 215 determines, based on the calculated difference, the presence or absence of an adhesion material on the sheet P (step S13). For example, if the calculated difference exceeds the threshold value TH, the detector 215 determines that an adhesion material is adherent to the sheet P. The detector 215 supplies, to the determiner 216, data indicating an area on the sheet P in which the adhesion material T is present.

If it is determined in step S13 that an adhesion material is adherent to the sheet P, the determiner 216 calculates, based on the data that indicates the area in which the adhesion material T is present and that has been supplied from the detecting portion 215, the area dimension of the adhesion material T adhering to the sheet P. After that, the determiner 216 determines whether or not the calculated area dimension of the adhesion material T exceeds the reference value R (step S14). On the other hand, if it is determined in step S13 that an adhesion material is not adherent to the sheet P, the procedure advances to step S16 to be described later.

If it is determined in step S14 that the area dimension of the adhesion material T exceeds the reference value R, the conveyor controller 152 controls the first gate 120 so as to guide the sheet P to the rejection sheet stacker 127. Accordingly, the sheet P is conveyed to the rejection sheet stacker 127 (step S15). On the other hand, if it is determined in step S14 that the area dimension of the adhesion material T does not exceed the reference value R, the conveyor controller 152 controls the first gate 120 to the sixth gate 125 so as to guide the sheet P to any one of the first stack/band portion 128 to the fourth stack/band portion 131, in accordance with the front and back orientation of the sheet P. Accordingly, the sheet P is conveyed to any one of the first stack/band portion 128 to the fourth stack/band portion 131 (step S16).

As described above, in this embodiment, the illumination controller 212 controls the illuminator 211 so as to illuminate the sheet P alternately with the first light L1 and the second light L2, the photo receiver 213 receives the first light L1 and the second light L2 that have been transmitted through the sheet P, the signal acquirer 214 acquires the first light-receiving signal S1 and the second light-receiving signal S2 from the photo receiver 213, and the detector 215 detects, based on the difference between the first light-receiving signal S1 and the second light-receiving signal S2, the adhesion material T adhering to the sheet P. This makes it possible to detect an adhesion material adhering to a sheet with a simple configuration.

Note that a configuration has been explained in which, if the first notification (the first notification indicating that the sheet P is a damaged bill) is received from the main controller 151, the conveyor controller 152 controls the first gate 120 so as to guide the sheet P to the rejection sheet stacker 127, but the present invention is not limited thereto. For example, if the first notification is received from the main controller 151, the conveyor controller 152 may control the first gate 120 to the sixth gate 125 so as to guide the sheet P to the shredder portion 133. Also, the main controller 151 may set, based on an operation instruction from the operating portion 102, whether to convey the sheet P decided to be a damaged bill to either the rejection sheet stacker 127 or the shredder portion 133.

According to at least one embodiment described above, the sheet inspection device 200 have the illuminator 211, the illumination controller 212, the photo receiver 213 and the detector 215. The illuminator 211 illuminates the sheet P with the first light L1 that has the first wavelength band and is absorbed at a high absorptivity by the adhesion material T that is adherent to the sheet P and is to be detected, and the second light L2 that has the second wavelength band and is absorbed by the adhesion material T at an absorptivity lower than the first wavelength band. The illumination controller 212 controls the illuminator 211 so as to illuminate the sheet P alternately with the first light L1 and the second light L2. The photo receiver 213 receives the first light L1 and the second light L2 that have been transmitted through the sheet P. The detecting portion 215 detects the adhesion material T adhering to the sheet P, based on the difference between the intensity of the first light L1 received by the photo receiver 213 and the intensity of the second light L2 received by the photo receiver 213.

The above embodiment can be expressed as a sheet inspection device comprising:
an illuminator configured to illuminate a sheet with first light that has a first wavelength band and is absorbed at a high absorptivity by an adhesion material that is adherent to the sheet and is to be detected and second light that has a second wavelength band and is absorbed by the adhesion material at an absorptivity lower than the first wavelength band;
an illumination controller configured to control the illuminator so as to illuminate the sheet alternately with the first light and the second light;
a photo receiver configured to receive the first light and the second light that have been transmitted through the sheet; and
a detector configured to detect that the adhesion material adherent to the sheet, if a difference between an intensity of the first light received by the photo receiver and an intensity of the second light received by the photo receiver exceeds a threshold value.

Although an embodiment of the present invention has been described, this embodiment is proposed as an example, and is not intended to limit the scope of the invention. This embodiment can be carried out in various other modes, and omission, replacement, and modification can be made in various forms without departing from the gist of the invention. The embodiment and modifications thereof are encompassed in the scope and the gist of the invention, and are also encompassed in the invention described in the claims and the equivalents thereof. It is understood that the use of the present tense for a device's action device can be construed as the device being implemented or configured to perform the action. E.g. the wording that a determiner determines that a material adheres to a sheet may be interpreted as the determiner is adapted/configured/implemented to determine.

## Claims

1. A sheet inspection device comprising:
an illuminator (211) configured to illuminate a sheet (P) with first light (L1) that has a first wavelength band and is absorbed by an adhesion material (T) adherent to the sheet (P) at a high absorptivity and second light (L2) that has a second wavelength band and is absorbed by the adhesion material (T) at an absorptivity lower than the first wavelength band;
an illumination controller (212) configured to control the illuminator (211) so as to illuminate the sheet (P) alternately with the first light (L1) and the second light (L2);
a photo receiver (213) configured to receive the first light (L1) and the second light (L2) that have been transmitted through the sheet (P); and
a detector (215) configured to detect the adhesion material (T) adherent to the sheet (P), based on a difference between an intensity of the first light (L1) received by the photo receiver (213) and an intensity of the second light (L2) received by the photo receiver (213).

2. The device according to claim 1 further comprising:
a determiner (216) configured to determine whether or not to reuse the sheet (P), based on an area dimension of the adhesion material (T) detected by the detector (215).

3. The device according to claim 2, wherein
the determiner (216) determines that the adhesion material (T) is adherent to the sheet (P), if the difference between the intensity of the first light (L1) received by the photo receiver (213) and the intensity of the second light (L2) received by the photo receiver (213) exceeds a threshold value (TH).

4. The device according to claim 2, wherein
the determiner (216) determines that the sheet (P) cannot be reused, if the area dimension of the adhesion material (T) exceeds a reference value (R).

5. The device according to claim 2, wherein
the determiner (216) determines that the sheet (P) can be reused, if the area dimension of the adhesion material (T) is less than or equal to the reference value (R).

6. The device according to claim 1 or 2, wherein
the first light (L1) and the second light (L2) of the illuminator (211) travel on the same optical path (LP) and are irradiated onto the sheet (P).

7. The device according to any one of claims 1 to 3, wherein
the illuminator (211) comprises a plurality of first light emitting elements (211a) configured to emit the first light (L1) and a plurality of second light emitting elements (211b) configured to emit the second light (L2), and the first light emitting elements (211a) and the second light emitting elements (211b) are lined up alternately.

8. The device according to claim 7, wherein
the illuminator (211) is configured to illuminate, with the first light (L1) and the second light (L2), the sheet (P) that is being conveyed, and the first light emitting elements (211a) and the second light emitting elements (211b) are lined up alternately in a direction intersecting a direction in which the sheet (P) is conveyed, and
the photo receiver (213) comprises a plurality of light receiving elements that are lined up in a direction intersecting the direction in which the sheet (P) is conveyed.

9. The device according to claim 7, wherein
the first light emitting elements (211a) and the second light emitting elements (211b) are lined up in a plurality of rows in a direction intersecting the direction in which the sheet (P) is conveyed.

10. The device according to any one of claims 1 to 9, wherein
the first light (L1) is light that peaks in a wavelength band with wavelengths of 3.3 [µm] to 3.6 [µm], and the second light (L2) is light that peaks in a wavelength band with wavelengths of 2.4 [µm] to 2.6 [µm].

11. A sheet processing apparatus comprising:
a take-out portion (110) configured to take out a supplied sheet (P);
a conveyor (112) configured to convey the sheet (P) taken out by the take-out portion (110);
an illuminator (211) configured to illuminate a sheet (P) with first light (L1) that has a first wavelength band and is absorbed by an adhesion material adherent to the sheet at a high absorptivity and second light that has a second wavelength band and is absorbed by the adhesion material at an absorptivity lower than the first wavelength band;
an illumination controller (212) configured to control the illuminator (211) so as to illuminate the sheet (P) alternately with the first light (L1) and the second light (L2);
a photo receiver (213) configured to receive the first light (L1) and the second light (L2) that have been transmitted through the sheet (P); and
a detector (215) configured to detect the adhesion material (T) adherent to the sheet (P), based on a difference between an intensity of the first light (L1) received by the photo receiver (213) and an intensity of the second light (L2) received by the photo receiver (213).
a switching portion (120) configured to switch a place where the sheet (P) is to be stacked, based on a determination result of the determiner (216).

12. The device according to claim 11, wherein
the determiner (216) is configured to determine whether or not to reuse the sheet (P), based on the area dimension of the adhesion material (T) detected by the detector (215).

13. The device according to claim 12, wherein
the determiner (216) determines that an adhesion material (T) is adherent to the sheet (P), if a difference between an intensity of first light (L1) received by a photo receiver (213) and an intensity of second light (L2) received by the photo receiver (213) exceeds a threshold value (TH).

14. The device according to claim 12, wherein
the determiner (216) determines that the sheet (P) cannot be reused, if the area dimension of the adhesion material (T) exceeds a reference value (R).

15. The device according to claim 12, wherein
the determiner (216) determines that the sheet (P) can be reused, if the area dimension of the adhesion material (T) is less than or equal to the reference value (R).

16. The device according to claim 11 or 12, wherein
the first light (L1) and the second light (L2) of an illuminator (211) travel on the same optical path (LP) and are irradiated onto the sheet (P).

17. The device according to any one of claims 11 to 13, wherein
the illuminator (211) comprises a plurality of first light emitting elements (211a) configured to emit the first light (L1) and a plurality of second light emitting elements (211b) configured to emit the second light (L2), and the first light emitting elements (211a) and the second light emitting elements (211b) are lined up alternately.

18. The device according to claim 17, wherein
the illuminator (211) is configured to illuminate, with the first light (L1) and the second light (L2), the sheet (P) that is being conveyed, and the first light emitting elements (211a) and the second light emitting elements (211b) are lined up alternately in a direction intersecting a direction in which the sheet (P) is conveyed, and
the photo receiver (213) comprises a plurality of light receiving elements that are lined up in a direction intersecting the direction in which the sheet (P) is conveyed.

19. The device according to claim 17, wherein
the first light emitting elements (211a) and the second light emitting elements (211b) are lined up in a plurality of rows in a direction intersecting the direction in which the sheet (P) is conveyed.

20. The device according to any one of claims 11 to 19, wherein
the first light (L1) is light that peaks in a wavelength band with wavelengths of 3.3 [µm] to 3.6 [µm], and the second light (L2) is light that peaks in a wavelength band with wavelengths of 2.4 [µm] to 2.6 [µm].
